# FASCICULE DE BREVET EUROPEEN

(11) **EP 0 885 581 B1**
(45) Date de publication et mention de la délivrance du brevet: **19.03.2008**
(21) Numéro de dépôt: 98110752.7
(22) Date de dépôt: 12.06.1998
(51) Int. Cl.: A47J 31/40

(54) **Dispositif automatique pour la production de café expresso**
Automatische Vorrichtung zum Produzieren von Espresso-Kaffee
Automatic device for producing espresso coffee

(30) Priorité: 19.06.1997 IT VI970096
(43) Date de publication de la demande: 23.12.1998
(73) Titulaire: Amico S.r.l., 36065 Mussolente (Vicenza) (IT)
(72) Inventeur: Gasparella, Valentino, 36065 Mussolente, Vicenza (IT)
(74) Mandataire: Bettello, Pietro

(56) Documents cités:
- EP-A- 0 117 583
- EP-A- 0 192 797
- EP-A- 0 756 842

## Description

L'invention concerne des perfectionnements à un dispositif automatique pour la production de café expresso selon le préambule de la revendication 1.

Un dispositif automatique pour la production de café expresso analogue à celui décrit dans le brevet européen n° 0117583, déposé par la même demanderesse, comprend essentiellement une plaque mobile verticalement qui, à l'aide de leviers appropriés et de cames convenablement profilées, commande le chargement de la poudre de café dans le conteneur porte-filtre et l'arasage de ladite charge sur la surface dudit conteneur, l'abaissement de l'élément presseur et l'alimentation en eau chaude pour la préparation de l'infusion, ainsi que le soulèvement du filtre et l'expulsion de la pastille de café épuisée à la fin du cycle de fonctionnement.

Un autre dispositif est établi par EP 0192797.

Dans la forme de réalisation préférée décrite dans le brevet précité, tout l'ensemble mécanique est soutenu par deux montants verticaux, tous deux ancrés à une base d'appui horizontale.

Le premier montant vertical joue le rôle de support pour le conteneur de café moulu où se réalise l'infusion.

Le deuxième montant vertical joue le rôle d'élément de guidage pour une plaque mobile qui supporte l'élément presseur.

Le déplacement vertical alternatif de cette plaque mobile, sous l'action d'un mécanisme à bielle/manivelle, entraîné par un petit moteur électrique, lui aussi solidaire dudit montant, fait pénétrer le presseur dans le conteneur du café moulu et permet la réalisation du café expresso.

Malheureusement, ce type de support présentait l'inconvénient d'un risque de flexion de ses montants, en conséquence des fortes pressions qui se manifestent pendant la phase de préparation du café expresso.

En pratique, lorsque le presseur pénètre dans le conteneur du café et exerce la pression de tassement de la poudre de café, les deux montants de support, étant constitués par deux lames verticales séparées, tendent à fléchir, ce qui rend difficile, en particulier, la course de déplacement vertical de la plaque porte-presseur.

Le but de l'invention est la réalisation d'un support qui élimine cet inconvénient.

Ce but est atteint grâce à un dispositif selon les enseignements de la revendication 1.

Des formes avantageuses de réalisation de l'invention font l'objet des sous-revendications.

On prévoit l'utilisation d'un unique montant, celui de guidage de la plaque mobile porte-presseur, montant qui fait aussi avantageusement office de support du conteneur du café.

Sous le rapport de la construction, le conteneur du café est muni d'un étrier qui se bloque sur le montant de guidage de la plaque mobile.

Pour rendre cet assemblage très rigide, il est prévu qu'en supplément des vis de blocage normales, l'assemblage est aussi complété par un encastrement entre les deux éléments, par exemple en pratiquant une fente sur le montant de guidage de la plaque mobile, ladite fente venant s'encastrer avec une saillie correspondante prévue sur l'étrier porte-conteneur du café.

Un autre avantage qu'on obtient avec cette construction est en outre celui consistant à obtenir un mécanisme automatique pour la production de café expresso qui se présente comme un "monobloc" unique, de nature à ne pas exiger nécessairement une base d'appui bien définie, de sorte qu'il peut être monté sur des appareils distributeurs de différentes conformations.

Un autre avantage est représenté par le fait que le conteneur, avec son étrier, peut être ancré sur l'une ou l'autre des surfaces du montant de guidage de la plaque mobile porte-presseur, de sorte que le monobloc complet peut se présenter dans deux configurations symétriques, une droite et une gauche, en utilisant toujours les mêmes composants ; ceci se révèle notablement avantageux lorsqu'on doit équiper des appareils distributeurs de café ménagers ou des machines automatiques de bar de deux ou plus de deux postes.

Ces caractéristiques de l'invention, ainsi que d'autres, seront mieux mises en évidence au moyen de la description d'une forme possible de réalisation, donnée à seul titre d'exemple illustratif et non limitatif, à l'aide des planches de dessins annexées sur lesquelles :
- la Fig. 1 (Planche I) représente une vue en perspective, dans la position de repos, d'un mécanisme réalisé conformément à l'invention ;
- la Fig. 2 représente le mécanisme de la Fig. 1, prise selon un autre angle et dans la position de travail ;
- la Fig. 3 (Planche II) représente une vue en élévation correspondant à la Fig. 1 ;
- la Fig. 4 représente une vue de côté dans la position selon la Fig. 3 ;
- la Fig. 5 représente une vue en plan de l'invention, en coupe selon la ligne V-V de la Fig. 4.

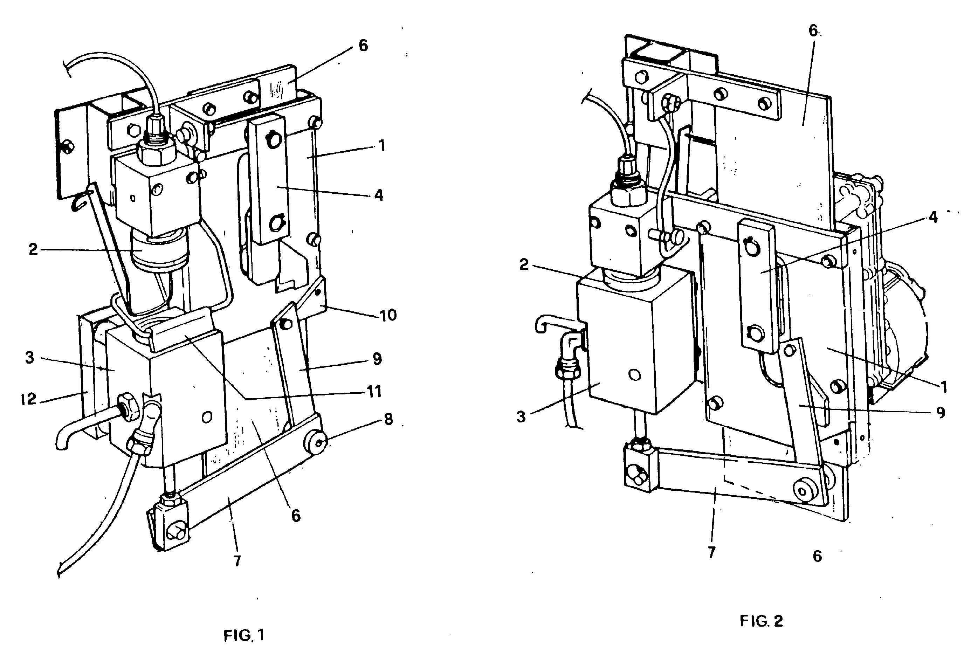

Dans la forme de réalisation de l'invention représentée sur les Fig. 1, 2, on remarque que la plaque mobile 1, munie de l'élément presseur 2, qui pénètre dans le conteneur 3 plein de café moulu, est mise en mouvement vertical par un dispositif du type bielle/manivelle 4 entraîné par un petit moteur 5.

La plaque mobile 1 est guidée dans son mouvement vertical par le montant 6.

Le filtre qui soutient le café introduit dans le conteneur 3 est mis en mouvement par un levier 7, capable de tourner sur l'axe 8, et dont le bras en équerre 9 coopère avec des protubérances 10 de la plaque mobile 1.

Sur la Fig. 1, la plaque mobile 1 et l'élément presseur 2, dont elle est munie, se trouvent dans la position la plus élevée, avant de déclencher le mouvement de descente pendant lequel ledit élément 2 pénètre dans le conteneur 3.

Dans cette position, le filtre relié au levier 7 est à l'état abaissé, prêt à recevoir le café qui est arasé superficiellement par la lame 11.

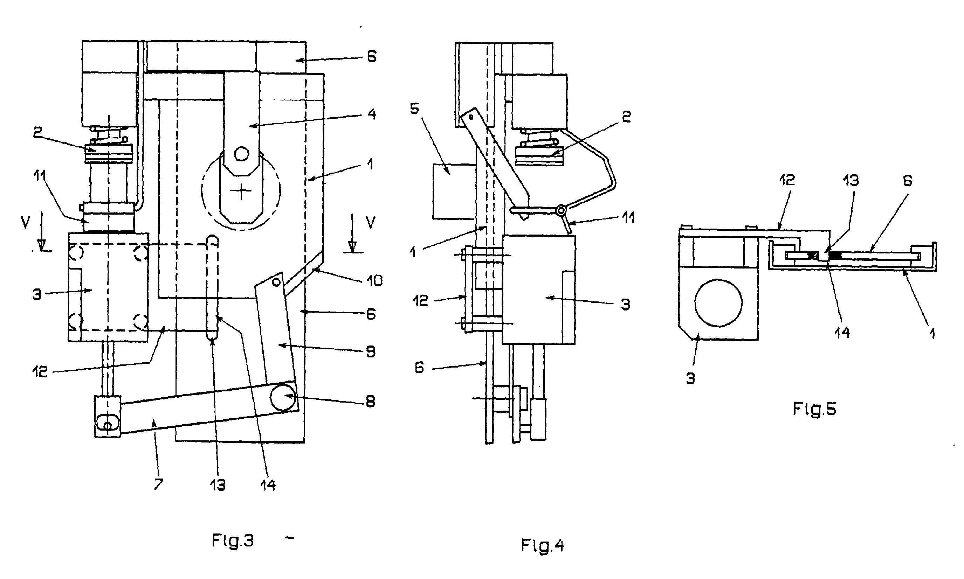

Comme le montrent les fig. 3 à 5, le conteneur 3 est supporté par le montant 6.

Sous le rapport de la construction, le conteneur 3 est muni d'un étrier 12 qui vient s'ancrer au montant 6 à l'aide de vis.

La liaison étrier/montant est encore renforcée par l'encastrement réalisé entre la saillie 13, formée sur l'étrier 12, et la fente 14 formée sur le montant 6.

On peut ainsi constater à la lecture de ce qui précède que le dispositif selon l'invention est grandement simplifié, car il se présente sous forme d'un monobloc qui n'exige pas de base d'appui.

Il en résulte en outre une plus grande fiabilité du fonctionnement, puisqu'on a éliminé les risques de flexion, et une notable diminution du coût final pour l'utilisateur, en ce sens qu'on n'a plus besoin des composants de support du dispositif, ainsi qu'en raison du fait que le monobloc ainsi conformé peut être monté dans différentes positions et qu'il est donc apte à être monté sur différentes machines, possédant deux ou plus de deux têtes de distribution juxtaposées.

## Revendications

1. Dispositif automatique pour la production de café expresso, ledit dispositif étant destiné à être associé à un ensemble connu comprenant un broyeur à café pour la production de café en poudre, avec son moteur électrique de commande, et une chaudière pour la production d'eau chaude sous pression, ce dispositif étant encore du type qui comprend :
- un conteneur fixe (3) dans lequel s'effectue l'infusion du café,
- un élément presseur supérieur (2) qui se déplace verticalement dans les deux sens, de façon alternative, entre une position inférieure, de production du café, à l'intérieur du conteneur (3) et une position supérieure, à l'extérieur dudit conteneur,
- une plaque (1) mobile verticalement dans les deux sens, qui supporte le presseur (2),
- un montant fixe (6) de guidage du déplacement de la plaque mobile (1),
- un système bielle/manivelle (4) qui commande le déplacement de la plaque mobile (1),
ledit dispositif étant **caractérisé en ce que** le conteneur (3) est supporté par le montant (6) de guidage de la plaque mobile (1).

2. Dispositif selon la revendication 1, **caractérisé en ce que** l'ancrage du conteneur (3) au montant (6) est réalisé au moyen d'un étrier (12).

3. Dispositif selon la revendication 2, **caractérisé en ce que** la fixation entre l'étrier (12) et le montant (6) est réalisée à l'aide d'assemblages mobiles.

4. Dispositif selon une ou plusieurs des revendications précédentes, **caractérisé en ce que** l'assemblage entre l'étrier (12) et le montant (6) est réalisé par encastrement.

5. Dispositif selon la revendication 4, **caractérisé en ce que** l'encastrement se produit entre une saillie (13) présente sur le corps de l'étrier (12) et une fente (14) ménagée sur le corps du montant (6).

## Claims

1. Automatic device for the production of espresso coffee, said device being intended to be associated with a known assembly comprising a coffee grinder for the production of ground coffee, with its driving electric motor, and a boiler for the production of pressurised hot water, this device further being of the type which comprises:
- a fixed container (3) in which the infusion of the coffee takes place,
- an upper presser element (2) which moves vertically in the two directions, in an alternate manner between a lower coffee production position inside the container (3) and an upper position outside said container,
- a plate (1) which is vertically movable in the two directions, which supports the presser (2),
- a fixed upright (6) guiding the movement of the movable plate (1),
- a handle/connecting rod (4) which drives the movement of the movable plate (1),
said device being **characterised in that** the container (3) is supported by the upright (6) guiding the movable plate (1).

2. Device according to claim 1, **characterised in that** the anchorage of the container (3) to the upright (6) is realised by means of a bracket (12).

3. Device according to claim 2, **characterised in that** the fixing between the bracket (12) and the upright (6) is realised with the aid of movable connections.

4. Device according to one or more of the preceding claims, **characterised in that** the connection between the bracket (12) and the upright (6) is realised by fixed joint.

5. Device according to claim 4, **characterised in that** the fixed joint is made between a projection (13) provided on the body of the bracket (12) and a slit (14) made on the body of the upright (6).

## Patentansprüche

1. Automatische Vorrichtung zur Produktion von Espresso-Kaffee, wobei die Vorrichtung dazu bestimmt ist, an eine bekannte Konstruktion angeschlossen zu werden, welche eine Kaffeemühle mit einem elektrisch angetriebenen Motor zur Herstellung von Pulverkaffee enthält, und einen Dampfkessel zur Produktion von heißem Wasser unter Druck, wobei diese Vorrichtung ebenfalls umfasst:
- einen festen Behälter (3), in welchem der Aufguss von Kaffe erfolgt,
- ein Hochdruck-Presselement (2), welches sich vertikal alternativ zwischen einer unteren Position zur Produktion von Kaffee im Behälter (3) und einer oberen Position außerhalb des Behälters in die beiden Richtungen verschiebt,
- eine Platte (1), welche vertikal in die beiden Richtungen beweglich ist und das Presselement (2) trägt,
- einen festen Ständer (6) zur Führung der Verschiebung der beweglichen Platte (1),
- ein Treibstangen/Kurbel-System (4), welches die Verschiebung der beweglichen Platte (1) steuert,
wobei die Vorrichtung **dadurch gekennzeichnet ist, dass** der Behälter (3) von dem Ständer (6) zur Führung der beweglichen Platte (1) getragen wird.

2. Vorrichtung nach Anspruch 1, **dadurch gekennzeichnet, dass** die Verankerung des Behälters (3) an dem Ständer (6) mittels eines Bügels (12) erfolgt.

3. Vorrichtung nach Anspruch 2, **dadurch gekennzeichnet, dass** die Befestigung zwischen dem Bügel (12) und dem Ständer (6) mittels beweglicher Verbindungen erfolgt.

4. Vorrichtung nach einem oder mehreren der vorangehenden Ansprüche, **dadurch gekennzeichnet, dass** die Verbindung zwischen dem Bügel (12) und dem Ständer (6) mittels Zapfverbindung erfolgt.

5. Vorrichtung nach Anspruch 4, **dadurch gekennzeichnet, dass** die Zapfverbindung zwischen einem Ansatz (13), der sich auf dem Bügelkörper (12) befindet, und einem am Körper des Ständers (6) befindlichen Schlitz (14) erfolgt.
